# EUROPÄISCHE PATENTSCHRIFT

(11) **EP 0 698 629 B1**
(45) Veröffentlichungstag und Bekanntmachung des Hinweises auf die Patenterteilung: **17.05.2000**
(21) Anmeldenummer: 95112966.7
(22) Anmeldetag: 17.08.1995
(51) Int. Cl.: C08G 18/66, C08G 18/38, C08G 18/80, C09D 175/06

(54) **Epoxidfreies, wärmehärtbares Beschichtungssystem**
Epoxy-free heat-curable coating system
Système de revêtement thermodurcissable exempt d'époxyde

(30) Priorität: 26.08.1994 DE 4430399
(43) Veröffentlichungstag der Anmeldung: 28.02.1996
(73) Patentinhaber: EMS-INVENTA AG, 8001 Zürich (CH)
(72) Erfinder: Hoppe, Manfred, Dr. rer. nat., CH-7000 Chur (CH); Kaplan, Andreas, Dr. rer. nat., CH-7000 Chur (CH); Gisler, Renè, CH-7000 Chur (CH)
(74) Vertreter: Becker Kurig Straus

(56) Entgegenhaltungen:
- EP-A- 0 056 167
- DE-A- 1 494 448
- DE-A- 2 708 611
- DE-A- 3 232 463

## Beschreibung

Die Erfindung betrifft epoxidfreie, wärmehärtbare Beschichtungssysteme auf der Basis von hydroxylterminierten Polyesterharzen, carboxylgruppenhaltigen, blockierten Polycyanaten und β-Hydroxyalkylamiden.

Wärmehärtbare Pulverlacke geben bei der Applikation keine organischen Lösungsmittel ab und besitzen deshalb gegenüber Flüssiglacken eindeutig ökologische Vorteile. Die Vernetzung in der Wärme erfolgt über Polyadditions- oder Polykondensationsreaktionen zwischen den in den Bindemitteln enthaltenen funktionellen Gruppen. Typische Bindemittelsysteme sind Epoxidharze/härter, Carboxyl-Polyester/Epoxide, Hydroxyl-Polyester/lsocyanate, Hydroxyl-Acrylate/Isocyanate, Carboxyl-Acrylate/Epoxide, Epoxid-Acrylate/Dicarbonsäuren, Carboxyl-Polyester oder Carboxyl-Acrylate/β-Hydroxyalkylamide u.a. Die angeführten Bindemittelsysteme unterscheiden sich neben den lacktechnischen Eigenschaften besonders in der Beständigkeit bei Außenbewitterung, besitzen jedoch gemeinsam hochglänzende Oberflächen, d.h. einen Glanzgrad von > ca. 80 (DIN 67530, Einstrahlwinkel 60 °).

Es besteht heute vermehrt ein Bedarf an Pulverlacken mit matten oder halbmatten Oberflächen mit einem Glanzgrad von > 60 bei einem Einstrahlwinkel von 60 ° (DIN 67530) und guter Außenbewitterungsbeständigkeit für Anwendungen, z.B. im Architektur-, Automobil- und Möbelbereich etc.

Die in der Flüssiglackindustrie üblichen Mattierungsadditive, wie z.B. Kreiden, fein disperse Kieselsäuren, Talkum etc. zeigen in Pulverlacken nur einen sehr geringen Mattierungseffekt und bewirken in größeren Zusatzmengen eine unzulässige Verschlechterung der lacktechnischen Eigenschaften. Mit dem Bindemittel unverträgliche Additive, wie z.B. Wachse etc. ergeben zwar sogenannte seidenglänzende Oberflächen (Glanzgrad > 60 bei einem Einstrahlwinkel von 60 °), doch führt die Anreicherung der unverträglichen Additive an der Oberfläche zu in der Praxis nicht erwünschten Effekten.

In US-A-3,842,035 wird deshalb vorgeschlagen, matte Pulverlacküberzüge durch sogenanntes Dryblending von fertigen Pulverlacken mit genügend unterschiedlicher Reaktivität, d.h. von Pulverlacken mit sehr kurzen und sehr langen Gelierzeiten, herzustellen. Dieses Verfahren führt zwar zu Überzügen mit gewünschter Mattierung, doch ist das Dryblending fertiger Pulverlacke sehr aufwendig und teuer, und durch Entmischung, besonders bei der Rückführung von Overspray ist eine gleichmäßige und reproduzierbare Oberfläche nicht mehr gewährleistet. Es hat daher nicht an Versuchen gefehlt, Pulverlacke mit matten Oberflächen durch gemeinsame Extrusion aller Komponenten ohne Entmischungsprobleme und guter Reproduzierbarkeit herzustellen.

In der DE-A-2,324,696 wird ein Verfahren zur Herstellung matter Überzüge durch Verwendung eines mit Epoxidgruppen reagierenden Spezialhärters, das Salz von cyclischen Amidinen mit bestimmten Polycarbonsäuren, vorgeschlagen. Die Vernetzung des Pulverlacks erfolgt nach diesem Verfahren mit unterschiedlicher Reaktivität bei verschiedenen Temperaturen, wodurch sich an der Oberfläche Mikrostrukturen ausbilden, die eine matte Oberfläche aufweisen. Die Verwendung dieses Verfahrens beschränkt sich jedoch auf Epoxid- und Carboxyl-Polyester/Epoxid-Pulverlackemit Ausnahme von CarboxylPolyester/Triglycidylisocyanurat (TGIC)-Pulverlacken, weshalb nach diesem Verfahren keine Pulverlacke mit genügender Außenwitterungsbeständigkeit hergestellt werden können.

DE-A-1 494 448 beschreibt Polyurethanüberzüge, hergestellt aus Flüssiglacken auf Basis von Polyisocyanaten, Polyamiden und Polyesterpolyolen, die sich durch ihre glänzenden Oberflächen auszeichnen. Die Polyesterpolyole sind dabei wenigstens zum Teil von einer dimeren Fettsäure abgeleitet. Die Polyurethanüberzüge werden derart hergestellt, daß man die Polyole mit einem Polyisocyanat in einem geeigneten Lösungsmittel gründlich mischt, diese auf bestimmte Oberflächen aufbringt und ca. 2,5 Stunden trocknen läßt. Als Lösungsmittel werden dabei insbesondere Xylol, Toluol, Cellosolveacetat, Methylisobuthylketon und Ethylacetat verwendet. Dieses sind jedoch toxikologisch bedenklich.

In EP-366 608 B1 wird ebenfalls ein Verfahren zur Herstellung von Pulverlacken mit matten Oberflächen vorgeschlagen. Es betrifft Pulverlacke auf Basis von Epoxidharzen oder Epoxidharzen oder Epoxidverbindungen, wie z.B. Triglycidylisocyanurat (TGIC) und Gemischen aus Di-, Tri- oder Tetrakis-(β-carboxyethyl)-cyclohexanonen oder -cyclopentanonen und carboxylterminierten Polyesterharzen. Der Matteffekt wird hier auf die unterschiedliche Reaktivität zwischen den aliphatischen Carboxylgruppen des Vernetzers und den aromatischen Carboxylgruppen des carboxylterminierten Polyesterharzes zurückgeführt.

DE-A-3 232 463 beschreibt schließlich die Herstellung von Pulverlacken mit matten Oberflächen mit einem Bindemittelsystem auf Basis von hydroxylterminierten Polyesterharzen, Epoxidverbindungen, wie z.B. TGIC und speziellen reversibel blockierten Polyisocyanaten mit freien Carboxylgruppen als Vernetzer. Die blockierten Polyisocyanate enthalten pro Molekül mehr als eine blockierte Isocyanatgruppe, eine Säurezahl von 20 bis 150 mg KOH/g, vorzugsweise 25 bis 80 mg KOH/g und einen Quotienten aus NCO-Gehalt und Säurezahl von 0,075 bis 0,340, vorzugsweise 0,100 bis 0,300. Als besonders überraschend wird erwähnt, daß nicht allein die Säurezahl oder der NCO-Gehalt für die Erzeilung matter Oberflächen verantwortlich ist, sondern, obwohl unter den für Pulverlacken üblichen Härtungsbedingungen Isocyanat- und Carboxylgruppen kaum untereinander reagieren, das Verhältnis zwischen Isocyanat- zu Carboxylgruppen. Mit einem in einer weiteren Patentschrift (EP-A-0 056 167) beschriebenen Bindemittelsystem, das ebenfalls einen Carboxylgruppen-enthaltenden blockierten Polyisocyanatvernetzer, jedoch ein anderes Isocyanat/Carboxyl-Verhältnis aufweist, werden daher auch nur Überzüge mit hohem Glanz erzielt.

Obwohl die in den Patentschriften EP-0 366 608 B1 und DE-A -3 232 463 vorgeschlagenen Verfahren nach gemeinsamer Extrusion sämtlicher Komponenten zu matten Oberflächen mit guter Außenbewitterungsbeständigkeit führen, besitzen doch beide Bindemittelsysteme den wesentlichen Nachteil, daß sie Epoxidverbindungen, insbesondere Trisglycidylisocyanurat (TGIC) enthalten und dadurch toxikologisch außerordentlich bdenklich sind.

Aufgabe der Erfindung ist es nun, ein epoxidfreies, wärmehärtbares, durch gemeinsame Extrusion aller Komponenten herstellbares Beschichtungssystem zur Verfügung zu stellen, das im Gegensatz zum Stand der Technik toxikologisch absolut unbedenklich ist und sich zur Herstellung von besonders bewitterungsbeständigen Schutzschichten mit matten Oberflächen verwenden läßt.

Diese Aufgabe wird gelöst durch das epoxidfreie, wärmehärtbare Beschichtungssystem gemäß Anspruch 1, das Verfahren zur Herstellung des Beschichtungssystems gemäß Anspruch 6 und seine Verwendung.

In den Unteransprüchen sind vorteilhafte Ausführungsformen der Erfindung enthalten. Die Erfindung betrifft daher insbesondere ein Beschichtungssystem auf Basis von hydroxylterminierten Polyesterharzen und carboxylgruppenhaltigen, reversibel blockierten Polyisocyanaten und β-Hydroxyalkylamiden als Vernetzer.

Damit besteht die Erfindung in einem für eine zweistufige Vernetzung geeigneten Beschichtungssystem, dessen hydroxylterminiertes Polyesterharz
a) vorgängig für eine Vernetzung mit β-Hydroxylalkylamid und
b) nachfolgend bei Temperaturen von ca. 160 °C nach Deblocken des Polyisocyanats für weiteres Vernetzen
geeignet ist.

Das erfindungsgemäße epoxidfreie, wärmehärtbare, witterungsbeständige und toxikologisch einwandfreie Beschichtungssystem besteht somit aus:
- einem hydroxylterminierten Polyesterharz mit einer OH-Zahl im Bereich von 20 bis 200 mg KOH/g,
- einem carboxylgruppenhaitigen, reversibel blockierten Polyisocyanat mit einer Säurezahl von 20 bis 150 mg KOH/g neben
- einem β-Hydroxylalkylamid mit mindestens zwei, bevorzugt zwei bis vier β-Hydroxylalkylamidgruppen, pro Molekül,
- gegebenenfalls für Pulverlacke üblichen Additiven, wie z.B. Benetzungs-, Verlaufs- oder Entgasungsmittel, Hitze- oder UV-Stabilisatoren, Beschleuniger, z.B. DBTL etc., Pigmente, Farbstoffe, Füllstoffe etc.

Als carboxylterminierte Polyesterharze sind für das erfindungsgemäße Beschichtungssystem Polyester geeignet, die Hydroxylzahlen im Bereich von 20 bis 200 mg KOH/g, vorzugsweise 30 bis 120 mg KOH/g und Glasumwandlungstemperaturen (DSC) von > 40 °C aufweisen.

Die Herstellung dieser hydroxylterminierten Polyesterharze erfolgt in bekannter Weise durch gemeinsames Erhitzen von zwei- und/oder mehrwertigen Alkoholen mit mehrwertigen, vorzugsweise zwei- oder mehrwertigen aliphatischen, cycloaliphatischen oder aromatischen Carbonsäuren in Gegenwart eines Veresterungskatalysators auf eine Temperatur bis ca. 250 °C und gegen Ende der Reaktion unter vermindertem Druck.

Die verwendeten carboxylgruppenhaltigen, reversibel blockierten Polyisocyanate weisen die allgemeine Formel (I) auf: 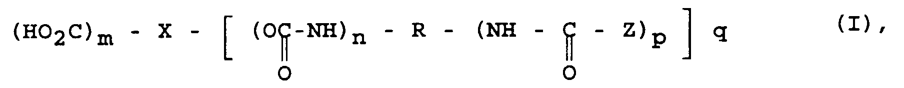 worin bedeuten:
- X: einen (q n + m)-wertigen linearen oder verzweigten aliphatischen oder cycloaliphatischen Rest,
- R: einen (n + p)-wertigen linearen oder verzweigten aliphatischen oder cycloaliphatischen Rest,
- Z: den Rest eines Isocyanatblockierungsmittels Z-H,
- m: eine Zahl von 1 bis 3, vorzugsweise 1,
- n: eine Zahl von 1 bis 4, vorzugsweise 1 bis 2,
- p: eine Zahl von 1 bis 4, vorzugsweise 1 bis 2,
- q: eine Zahl von 1 bis 4, vorzugsweise 1 bis 2,
und die Summe von p + q größer als 2 ist.

Die Herstellung des carboxylgruppenhaltigen, reversibel blockierten Isocyanats erfolgt nach bekannten Verfahren, z.B. durch Umsatz einer Hydroxycarbonsäure mit Polyisocyanat in Gegenwart eines Blockierungsmittels in der Wärme in Lösung unter N₂ und nachfolgender Isolierung des gebildeten Additivs analog den in DE-A-3 232 463 beschriebenen Verfahren. Bevorzugte Ausgangsmaterialien sind als Hydroxycarbonsäure, insbesondere 2,2-Bis-(hydroxymethyl)propionsäure, als Polyisocyanate Isophorondiisocyanat oder Hexamethylendiisocyanat oder Prepolymere oder durch Selbstaddition daraus erhältliche Oligomere und als Blockierungsmittel Lactame, bevorzugt ε-Caprolactam.

Die verwendeten β-Hydroxyalkylamide des erfindungsgemäßen Beschichtungssystems müssen mindestens zwei β-Hydroxyalkylamidgruppen pro Molekül enthalten und weisen folgende Formel (II) auf: 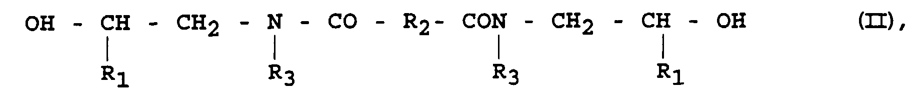 worin bedeuten
- R₁: gleiche oder verschiedene Alkylreste mit 1 bis 4 C-Atomen oder Wasserstoff,
- R₂: ein aliphatischer, cycloaliphatischer, araliphatischer oder aromatischer Rest,
- R₃: 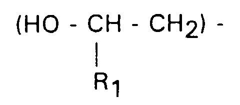 oder gleiche oder unterschiedliche Alkylreste mit 1 bis 4 C-Atomen oder Wasserstoff.

Für das erfindungsgemäße Beschichtungssystem besonders bevorzugte β-Hydroxyalkylamide sind:
- N,N'-Di(β-hydroxyethyl)acetamid
- Bis (β-hydroxyethyl)adipamid
- Bis (β-hydroxypropyl)adipamid
- Bis [N,N'-di(β-hydroxyethyl)]adipamid
- Bis [N,N'-di(β-hydroxypropyl)]adipamid.

Das Verhältnis der Hydroxylamidgruppen zu Carboxylgruppen im Bindemittelharz liegt vorteilhaft zwischen 0,5 und 1,5.

Die Herstellung der β-Hydroxyalkylamide erfolgt in bekannter Weise durch Umsatz der Ester der entsprechenden Diacarbonsäure mit Alkanolaminen in der Wärme.

Im erfindungsgemäßen Beschichtungssystem ist zur Erreichung guter lacktechnischer Eigenschaften ein Verhältnis zwischen den β-Hydroxyalkylamidgruppen und den Carboxylgruppen der erfindungsgemäßen carboxylgruppenhaltigen, reversibel blockierten Polyisocyanaten von 0,5 bis 1,5, vorzugsweise von 0,8 bis 1,2 erforderlich. Weiterhin weisen β-Hydroxyalkylamide oder ihre Gemische zur Erreichung guter lacktechnischer Eigenschaften eine durchschnittliche β-Hydroxyalkylamid-Funktionalität von 2 bis 4 auf.

Die Herstellung der erfindungsgemäßen Beschichtungssysteme erfolgt vorzugsweise in Form eines Pulverlacks in der Schmelze durch gemeinsame Extrusion sämtlicher Komponenten bei Temperaturen zwischen 80 bis 130 °C. Das Extrudat wird anschließend abgekühlt, gemahlen und auf eine Korngröße von < 90 µm abgesiebt. Grundsätzlich sind auch andere Verfahren zur Herstellung der Beschichtungssysteme geeignet, wie z.B. Vermischen der Komponenten in Lösung und anschließende Ausfällung oder destillative Entfernung der Lösungsmittel, doch besitzen diese Verfahren keine praktische Bedeutung.

Die Verwendung der erfindungsgemäßen Beschichtungssysteme für Schutzschichten mit guter Witterungsbeständigkeit und matten Oberflächen erfolgt nach für Pulverlacke üblichen Verfahren, z.B. mittels einer elektrostatischen Pulverlacksprühvorrichtungnach dem triboelektrischen oder Corona-Verfahren oder nach dem Wirbelbett-Verfahren etc.

Das erfindungsgemäße Beschichtungssystem kann auch aus Lösung appliziert werden, wodurch ebenfalls matte Überzüge mit guten lacktechnischen Eigenschaften erhalten werden.

Die erfindungsgemmäßen Beschichtungssysteme besitzen bei normalen Umgebungstemperaturen eine gute Lagerstabilität und zeigen nach der Vernetzung zwischen 150 bis 220 °C gute mechanische Eigenschaften sowie glatte und zugleich matte Oberflächen. Sie zeichnen sich durch Witterungsbeständigkeit aus und sind zudem toxikologisch absolut unbedenklich.

Die folgenden Beispiele und die Tabelle 1 charakterisieren die Herstellung und die Eigenschaften des erfindungsgemäßen Beschichtungssystems.

### Beispiel A : Hydroxylterminierte Polyester

In einem 2 ℓ Veresterungsreaktor, versehen mit Temperaturfühler, Rührer, Rückflußkolonne und Destillationsbrücke werden 309,2 g (2,97 Mol) Neopentylglykol, 136,7 g (2,20 Mol) Ethylenglykol und 14,8 g (0,11 Mol) Trimethylolpropan vorgelegt und bei 140 °C unter einer während der ganzen Reaktionszeit aufrechtgehaltenen N₂-Atmosphäre aufgeschmolzen. Unter Rühren werden dann 731,1 g (4,40 Mol) Terephthalsäure und 0,6 g Veresterungskatalysator zugegeben. Nach schrittweiser Erhöhung der Innentemperatur wird die Reaktion solange fortgesetzt, bis kein Destillat mehr entsteht. Unter Vakuum von 20 mbar wird bis zum Erreichen einer Schmelzviskosität von ca. 20 Pas bei 160 °C kondensiert. Der erhaltene Polyester hat eine Säurezahl von < 2 mg KOH/g, eine Hydroxylzahl von 48 mg KOH/mg, eine ICI-Schmelzviskosität bei 160 °C von 18 Pas und eine Glasumwandlungstemperatur (DSC) von 64 °C.

### Beispiel B : Carboxylgruppenhaltiges, reversibel blockiertes Polyisocyanat

135 g (1,0 Mol) 2,2-Bis-(hydroxymethyl)propionsäurewerden gemeinsam mit 226 g (2,0 Mol) ε-Caprolactam in 200 ml Toluol gelöst und unter 1\2-Atmosphäre bei 100 °C innerhalb 30 Minuten mit 444 g (2,0 Mol) Isophorondiisocyanat versetzt. Es wird noch ca. 1 Stunde bei etwa 115 °C nachgerührt und anschließend die Hauptmenge Toluol unter Vakuum destillativ entfernt. Das als Rückstand erhaltene Produkt wird danach unter Vakuum von noch anhaftendem Toluol befreit. Die farblosen Kristalle weisen eine Säurezahl von ca. 70 (mg KOH/g) und einen Fließpunkt von 120 bis 128 °C auf.

### Beispiel C : Bis (β-hydroxyethyl)adipamat

348 g (2 Mol) Dimethyladipat und 244 g (4 Mol) Ethanolamin werden unter N₂-Atmosphäre in einem Reaktionsgefäß, ausgestattet mit einem Rührer, Thermometer und Destillationsaufsatz auf 110 °C erwärmt und während 15 Minuten unter Rückfluß umgesetzt. Anschließend wird bei der gleichen Temperatur die Umsetzung unter Entfernung des abgespaltenen Methanols während ca. 3 Stunden fortgesetzt und im Anschluß daran die Temperatur auf ca. 148 °C erhöht. Der Inhalt des Reaktionsgefäßes wird dann nach weiteren 90 Minuten unter N₂-Atmosphäre in eine Porzellanschale gegossen und nach dem Erstarren gemahlen. Das erhaltene Produkt hat einen Schmelzpunkt von 117 bis 120 °C und enthält noch ca. 1 % freies Ethanolamin.

Für sämtliche in Tabelle 1 beschriebenen Pulverlacke wurde das folgende Herstellverfahren verwendet:

### Herstellung der Pulverlacke

Die Formulierungsbestandteile werden in einem Henschelmischer bei 700 Upm während 30 Sekunden trocken gemischt und anschließend auf einem Buss-Co-Kneter (PLK 46) bei einer Manteltemperatur von 100 °C, gekühlter Schnecke und einer Schneckenumdrehung von 150 Upm extrudiert. Das Extrudat wird gekühlt, gemahlen und auf < 90 µm gesiebt.

Die lacktechnischen Prüfungen und Beurteilung der Oberflächen erfolgen auf mit Trichlorethan entfetteten Stahlblechen (Dicke 0,8 mm) bei einer Einbrenntemepratur von 200 °C während 30 Minuten und einer Schichtdicke von 60 bis 80 µm.

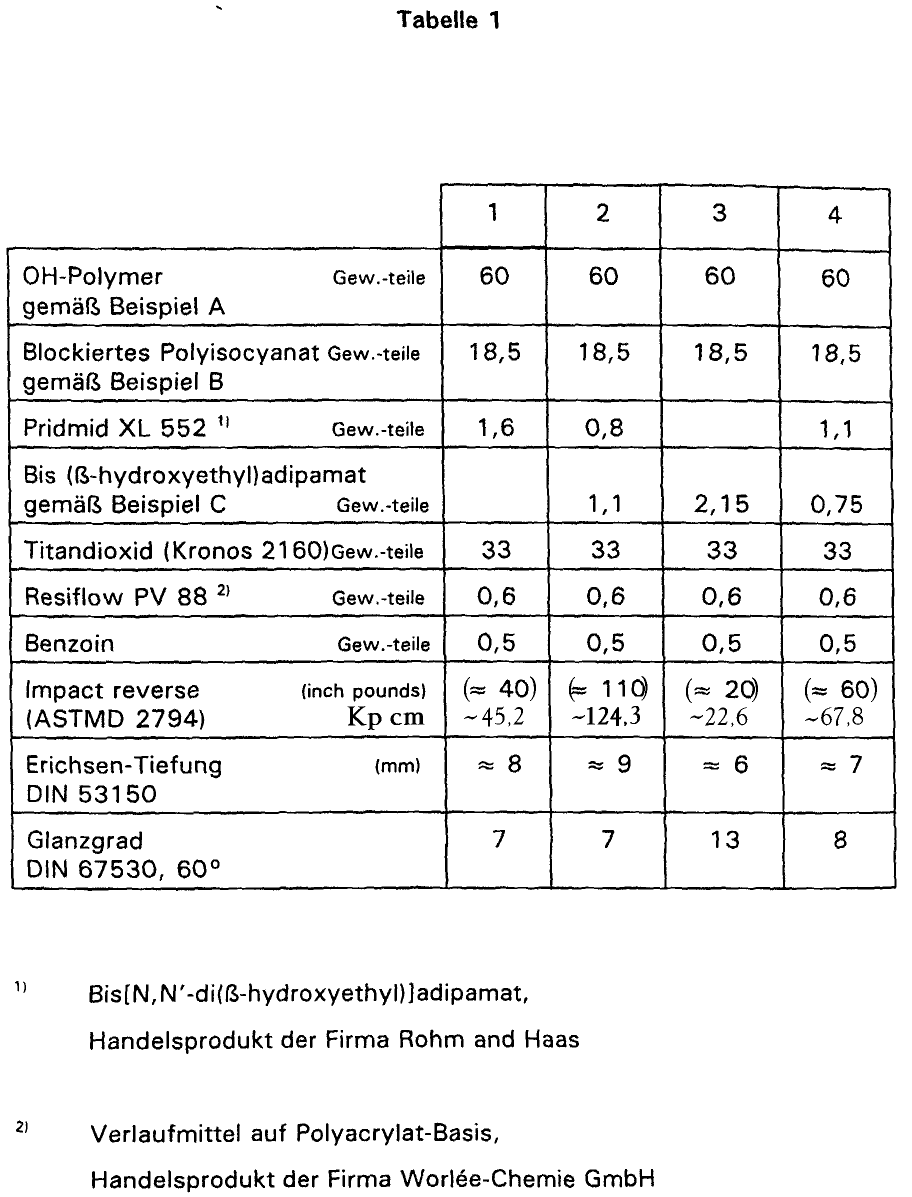

## Patentansprüche

1. Wärmehärtbares, epoxidfreies Beschichtungssystem aus Bindemittelharz auf Basis von mindestens einem hydroxylterminierten Polyesterharz [a] mit einer OH-Zahl im Bereich von 20 bis 200 mg KOH/g und einer Glasumwandlungstemperatur von mindestens 40 °C, mindestens einem carboxylgruppenhaltigen, reversibel blockierten Polyisocyanat [b] mit mindestens zwei blockierten Isocyanatgruppen pro Molekül und einer Säurezahl von 20 bis 150 mg KOH/g sowie mindestens einem β-Hydroxyalkylamid [c] mit mindestens zwei β-Hydroxyalkylamidgruppen pro Molekül und gegebenenfalls weiteren verwendungs- und verarbeitungsbedingten Additiven.

2. Beschichtungssystem gemäß Anspruch 1, dadurch gekennzeichnet, daß das hydroxylterminierte Polyesterharz aus mindestens einem, mindestens zweiwertigen linearen oder verzweigten, aliphatischen oder cycloaliphatischen Polyol und mindestens einer, mindestens zweiwertigen aliphatischen, cycloaliphatischen oder aromatischen Carbonsäure besteht.

3. Beschichtungssystem gemäß Anspruch 1, dadurch gekennzeichnet, daß das β-Hydroxyalkylamid [c] oder Gemische davon zwischen zwei bis vier β-Hydroxyalkylamidgruppen aufweisen.

4. Beschichtungssystem gemäß Anspruch 1, dadurch gekennzeichnet, daß pro OH-Gruppe im Bindemittelharz zwischen 0,5 bis 1,5 blockierte Isocyanatgruppen zur Verfügung stehen.

5. Beschichtungssystem gemäß Anspruch 1, dadurch gekennzeichnet, daß pro Carboxylgruppe im Bindemittelharz zwischen 0,5 bis 1,5 β-Hydroxyalkylamidgruppen zur Verfügung stehen.

6. Verfahren zur Herstellung von wärmehärtbaren, epoxidfreien Beschichtungssystemen nach einem der Ansprüche 1 bis 5, dadurch gekennzeichnet, daß die Komponenten a, b, c und gegebenenfalls weitere für Pulverlacke übliche Additive in der Schmelze bei 80 bis 130 °C extrudiert, abgekühlt, granuliert, gemahlen und auf eine Korngröße von < 90 µm abgesiebt werden.

7. Verwendung des Beschichtungssystems nach einem der Ansprüche 1 bis 5 zur Herstellung von Pulverlacken.

8. Verwendung des Beschichtungssystems nach einem der Ansprüche 1 bis 7 zur Herstellung von Schutzschichten mit matten Oberflächen und guter Witterungsbeständigkeit aus Pulverlacken nach dem triboelektrischen oder Corona-Pulversprühverfahren oder nach dem Wirbelbett-Verfahren.

9. Schutzschicht, herstellbar aus dem Beschichtungssystem nach einem der Ansprüche 1 bis 5.

## Claims

1. Heat-hardenable, epoxy-free coating system formed from bonding agent resin, based on at least one hydroxyl-terminated polyester resin [a] having an OH number in the range of 20 to 200 mg KOH/g and a glass conversion temperature of at least 40° C, at least one carboxyl-group-containing, reversibly-blocked polyisocyanate [b] having at least two blocked isocyanate groups per molecule and an acid number of 20 to 150mg KOH/g as well as at least one β-hydroxyalkylamide [c] having at least two β-hydroxyalkylamide groups per molecule and possibly additional additives depending on use and processing.

2. Coating system according to claim 1, characterised in that the hydroxyl-terminated polyester resin comprises at least one aliphatic or cycloaliphatic polyol which is at least bivalent, linear or branched, and at least one aliphatic, cycloaliphatic or aromatic carboxylic acid which is at least bivalent.

3. Coating system according to claim 1, characterised in that the β-hydroxyalkylamide [c] or mixtures thereof have between two and four β-hydroxyalkylamide groups.

4. Coating system according to claim 1, characterised in that between 0.5 and 1.5 blocked isocyanate groups are available per OH group in the bonding agent resin.

5. Coating system according to claim 1, characterised in that between 0.5 and 1.5 β-hydroxyalkylamide groups are available per carboxyl group in the bonding agent resin.

6. Method of producing heat-hardenable, epoxy-free coating systems according to one of claims 1 to 5, characterised in that the components a, b, c and possibly additional additives conventionally used for powder lacquers are extruded in the molten mass at between 80 and 130° C, cooled, granulated, ground and sieved to a particle size of < 90 µm.

7. Use of the coating system according to one of claims 1 to 5 for producing powder lacquers.

8. Use of the coating system according to one of claims 1 to 7 for producing protective layers, having matt surfaces and good weather resistance, from powder lacquers by the tribo-electrical or corona powder-spraying method or by the fluidisation method.

9. Protective layer, producible from the coating system according to one of claims 1 to 5.

## Revendications

1. Composition de revêtement thermodurcissable, exempte d'époxydes, consistant en une résine liante à base d'au moins une résine de polyester (a) à groupes terminaux hydroxy, ayant un indice d'OH dans l'intervalle de 20 à 200 mg de KOH/g et une température de transition du second ordre d'au moins 40°C, au moins un polyisocyanate (b) à groupes carboxyle, bloqué de manière réversible, à au moins deux groupes isocyanate bloqués par molécule, avec un indice d'acide de 20 à 150 mg de KOH/g, et au moins un β-hydroxyalkylamide (c) à au moins deux groupes β-hydroxyalkylamide par molécule, et le cas échéant d'autres additifs facilitant la fabrication et l'utilisation.

2. Composition de revêtement selon la revendication 1, caractérisée en ce que la résine de polyester à groupes terminaux hydroxy consiste en au moins un polyol aliphatique linéaire ou ramifié ou cycloaliphatique, au moins divalent, et au moins un acide carboxylique aliphatique, cycloaliphatique ou aromatique au moins divalent.

3. Composition de revêtement selon la revendication 1, caractérisée en ce que le β-hydroxyalkylamide (c) ou le mélange de β-hydroxyalkylamides contient deux à quatre groupes β-hydroxyalkylamide.

4. Composition de revêtement selon la revendication 1, caractérisée en ce que, pour un groupe OH de la résine liante, on dispose de 0,5 à 1,5 groupes isocyanate bloqués.

5. Composition de revêtement selon la revendication 1, caractérisée en ce que, pour un groupe carboxyle de la résine liante, on dispose de 0,5 à 1,5 groupes β-hydroxyalkylamide.

6. Procédé pour la préparation de compositions de revêtement thermodurcissables, exemptes d'époxyde, selon l'une des revendications 1 à 5, caractérisé en ce que l'on extrude les composants a), b), c) et le cas échéant d'autres additifs usuels pour les vernis en poudre à l'état fondu à des températures de 80 à 130°C, on refroidit, on met à l'état de granulés, on broie et on tamise à une dimension de grain inférieure à 90 µm.

7. Utilisation de la composition de revêtement selon l'une des revendications 1 à 5 pour la préparation de vernis en poudre.

8. Utilisation de la composition de revêtement selon l'une des revendications 1 à 7, pour l'application de couches protectrices à surface mate et bonne résistance aux influences climatiques à l'aide de vernis en poudre par la technique de projection tribo-électrique de poudre ou la technique de projection de poudre par décharge corona ou par la technique du lit tourbillonnaire.

9. Couche protectrice appliquée à l'aide d'une composition de revêtement selon l'une des revendications 1 à 5.
